# EUROPEAN PATENT APPLICATION

(11) **EP 4 273 894 A1**
(43) Date of publication of application: **08.11.2023**
(21) Application number: 22171919.8
(22) Date of filing: 05.05.2022
(51) Int. Cl.: H01F 3/10, H01F 3/14, H01F 27/24, H01F 27/28, H01F 27/30, H01F 27/38, H02M 3/00

(54) **CONVERTER COMPONENT AND CONVERTER**

(71) Applicant: Delta Electronics (Thailand) Public Co., Ltd., Samutprakarn 10280 (TH)
(72) Inventor: REHLAENDER, Philipp, 33098 Paderborn (DE); SCHAFMEISTER, Frank, 34414 Warburg (DE); BOECKER, Joachim, 12347 Berlin (DE)
(74) Representative: Hoefer & Partner Patentanwälte mbB

(57) **Abstract**

The invention concerns a converter component (1), especially for LLC resonant converters, comprising a magnetic core (2) with at least three legs (3, 4, 5), at least one first electrical winding (6), and at least one second electrical winding (7). Therein, the second electrical winding (7) is wound so as to at least once and at least partially surround at least a first leg (3) and a second leg (4) of the at least three legs (3, 4, 5) of the magnetic core (2). The invention also concerns a converter (100) comprising the converter component (1).

## Description

The invention concerns a converter component and a converter comprising the converter component.

Typically, LLC resonant converters use separate magnetic components for a resonant inductance, a magnetizing inductance, and a transformer thereof, wherein the resonant inductance and the magnetizing inductance, together with a resonance capacitor, are commonly referred to as "resonant tank". While integrating these into one single component is known in the state of the art, commonly referred to as an "integrated transformer", such known solutions commonly require litz wire for a primary and a secondary winding, which decreases a degree of flexibility for usage scenarios of the integrated transformer. For example, such known integrated transformers are not applicable in high-current and low-output voltage applications. Further, such known integrated transformers alter a distance or place a magnetic shunt between the primary and the secondary winding so as to adjust a stray inductance of the transformer. This, however, results in a large fringing field which drastically increases winding losses of the transformer and further limits the aforementioned degree of flexibility.

It is an object of the present invention to provide a converter component suitable for high-current low-voltage gain applications and with low winding losses. Further, it is an object of the present invention to provide a converter with these advantages and applications.

The solution of these objects is achieved by the independent claim. The dependent claims contain advantageous embodiments of the present invention.

The present invention concerns a converter component, especially for LLC resonant converters, which comprises a magnetic core, at least one first electrical winding, and at least one second electrical winding. The magnetic core comprises at least three legs. The second electrical winding is wound so as to at least once and at least partially surround at least a first leg and a second leg of the at least three legs of the magnetic core.

This converter component has the advantage that a resonant inductance and a magnetizing inductance are formed integrally with one another. Further, via the second electrical winding, the converter component provides a stray inductance which increases the degree of flexibility of applications for the converter component. Further yet, the converter is thus suitable for high-current low-voltage gain applications.

Preferably, especially via the second electrical winding being wound (at least once and at least partially) around the first leg and the second leg, the converter component comprises an integrated resonant inductance and an integrated magnetizing inductance.

Preferably, the term "one electrical winding" refers to one continuous electrical conductor, preferably electrically insulated, with one of such electrical windings preferably being wound around the respective leg(s) one or more times. The number of windings may, as is common, be referred to as "winding number" or "number of turns".

Further preferably, the at least one first electrical winding and the at least one second electrical winding are not connected to one another electrically. In other words, the at least one first electrical winding and the least one second electrical winding are electrically insulated from one another.

Advantageously, at least one of the first and/or second electrical windings is a flat plate-shaped conductor, preferably comprising copper.

Preferably, one or more of the electrical windings is a wire, especially a litz wire, preferably comprising copper.

In one advantageous embodiment, the first electrical winding is wound so as to at least once surround the first leg of the magnetic core. In particular, the first electrical winding is preferably wound so as to at least once and fully surround the first leg of the magnetic core.

Preferably, "to partially surround" means that the not all sides, especially in cross-sectional view perpendicular to an extension direction, of the respective object or leg are surrounded. In particular, "partially surround" means at least two sides of the respective object or leg are surrounded. Preferably, "to fully surround" means that all sides, especially in the aforementioned cross-section view, of the respective object or leg are surrounded. In the case that the respective element or leg does not comprise multiple sides, such as a circular leg in cross-section, "partially surround" means that not the entire circumference of the respective leg is surrounded. Preferably, in this case, "partially surround" means at least half of the circumference is surrounded. In particular, in the case that "partially or fully surround" refers to a winding, the term "surround" essentially means "wound around", with or without a gap between the winding and the respectively surrounded object or leg.

Further, the terms "partially surround" and "fully surround" refer respectively to cross-sectional views of the respective object or leg. For instance, even if one of the windings fully surrounds a respective leg, this means that a longitudinal portion perpendicular to the cross section of the leg, as viewed in cross section, is completely surrounded by the winding. Of course, the entire longitudinal length of the leg may also be partially or fully surrounded by the winding.

Advantageously, the first electrical winding is wound so as to not surround the second leg of the magnetic core. Preferably, the first electrical winding is wound so as to only surround the at least one first leg, either partially or preferably fully.

In a further advantageous embodiment, the first electrical winding and the second electrical winding are stacked along a first direction parallel to a winding axis of the electrical windings. In other words, the winding axis may be defined as an axis around which the respective windings are wound. The first electrical winding and the second electrical winding are preferably stacked on top of one another along the first direction which is parallel to this winding axis. In yet other words, the first electrical winding and the second electrical winding are preferably stacked without being wound around one another.

In another advantageous embodiment, the second leg of the magnetic core includes a first rounded surface configured to accommodate an outer surface of the first electrical winding. Preferably, the first rounded surface is concave with respect to the first electrical winding.

Further preferably, the second electrical winding is substantially U-shaped and partially surrounds the first leg and the second leg. Preferably, a rounded portion, especially concave portion, of the U-shaped second electrical winding is adjacent (i.e. surrounding) to the first leg, and straight portions thereof are adjacent (i.e. surrounding) to the second leg.

Preferably, the U-shaped second electrical winding only partially surrounds the first leg and the second leg, especially due to an opening in the U-shape.

Preferably, the first leg comprises a circular cross section. Preferably, the first leg is cylindrical.

In another advantageous embodiment, the second electrical winding is ring-shaped. In particular, the second electrical winding is preferably circular or oval ring-shaped. Therein, the second electrical winding completely surrounds the first leg and the second leg of the magnetic core. Herein, preferably, the second electrical winding "completely surrounding" means the first leg and the second leg are, taken together, completely surrounded, but not necessarily each completely surrounded.

Preferably, the second leg comprises a second rounded surface configured to accommodate an inner surface of the second electrical winding. Further preferably, the second rounded surface is opposite to the first rounded surface. Preferably, the second rounded surface is convex. Thereby, preferably, the second leg is disposed between the first and the second electrical windings when viewed from a plan view along the winding axis of the windings.

In an advantageous embodiment, the second electrical winding further includes at least one ring-shaped sub-winding section which completely surrounds the first leg or the second leg of the magnetic core. In particular, each of the at least one sub-winding sections completely surrounds exactly one of the first leg or the second leg. Preferably, the second electrical winding includes two ring-shaped sub-winding sections, which each completely surrounds exactly one of the first and second legs.

Advantageously, of the three or more legs of the magnetic core, at least one third leg is a return leg around which no windings are wound. The term "return leg" refers to the leg(s) of the magnetic core in which magnetic flux generated in the other winding legs flows to close the magnetic circuit. Preferably, the magnetic core comprises exactly one or exactly two third legs as return legs with no windings.

Preferably, at least one third leg includes a rounded surface configured to accommodate an outer surface of the first electrical winding and/or the second electrical winding. Preferably, this rounded surface is concave.

Further preferably, the magnetic core comprises at least one plate-shaped body portion connecting, especially magnetically, the at least three legs. In particular, the legs of the magnetic core preferably extend, especially perpendicularly, from the body portion of the magnetic core. Such structures are generally referred to as, for instance, "E-cores", "PQ-cores", in which rectangular or rounded elongated legs of the core extend from a preferably flat plate-shaped body portion of the magnetic core. The body portion of the magnetic core preferably closes the magnetic circuit between the return leg(s) and the winding legs.

In one advantageous embodiment, all legs and one plate-shaped body portion of the magnetic core are formed integrally with one another. Alternatively, a gap, especially an air gap and/or a gap containing magnetic filler material, is preferably provided between the body portion and at least one of the return leg(s) and/or the winding legs.

Preferably, the at least one first leg, the at least one third leg (return leg), and one plate-shaped body portion form a U-shaped or E-shaped magnetic core. Further preferably, in the converter component, two of such magnetic cores are stacked facing each other along the first direction. Therein, at least a part of the at least one second leg is inserted between the stacked magnetic cores. Therein, preferably, some or all of the respective legs opposing each other are directly connected to one another. Alternatively, some or all of the respective legs opposing each other are separated by an air gap or a gap filled with filler material.

Preferably, in the cases of the opposing legs either being connected or arranged with a gap therebetween, the resulting structure may further be considered one leg. For instance, two opposing return legs (one of each magnetic core) connected or separated by an air gap, preferably form one return leg. In the case of the winding legs, the first and/or second electrical windings are preferably, but not necessarily, wound especially at a connection region of the opposing winding legs. Further preferably, the connection region of the opposing winding legs, which corresponds to the ends of the opposing legs, is not necessarily arranged in the center between the two stacked magnetic cores. For instance, at least one of the respective leg(s) of one magnetic core may be formed shorter than the opposing respective leg of the other stacked magnetic core.

Alternatively, to the two such stacked magnetic cores, one first magnetic core comprising the respective legs may be covered by a flat plate-shaped or bar-shaped second magnetic core which magnetically connects the respective legs of the first magnetic core. Such an arrangement is commonly referred to as "UI" or "El" or "PQI" arrangement. Preferably therein, the converter component comprises exactly one first leg and exactly one second leg.

Preferably, the first leg is formed of at least two parts. A first part is formed, especially integrally, so as to extend from the body portion of the magnetic core. A second part is formed, especially as a separate element, as an insert disposed on the first part of the first leg. The possible second magnetic core preferably also comprises the first part, opposite to the first part of the first magnetic core and opposite to the second part. The converter component preferably comprises exactly one second part of the first leg. Preferably, the converter component comprises exactly two or exactly three or exactly four or more second parts of the first leg, i.e. inserts as parts of the first leg.

Preferably, the second leg is formed of at least two parts. A first part is formed, especially integrally, so as to extend from the body portion of the magnetic core. A second part is formed, especially as a separate element, as an insert disposed on the first part of the second leg. The possible second magnetic core preferably also comprises the first part, opposite to the first part of the first magnetic core and opposite to the second part. The converter component preferably comprises exactly one second part of the second leg. Preferably, the converter component comprises exactly two or exactly three or exactly four or more second parts of the second leg, i.e. inserts as parts of the second leg.

Preferably, the one or more return leg(s) each also comprise one or more first and second parts.

Preferably, the number of parts of each of the first leg, the second leg and the return leg(s) are equal.

The present invention also concerns a converter, especially an LLC resonant converter. The converter comprises at least one converter component according to any one of the foregoing described embodiments. Therein, the magnetic core is adapted, especially via the second electrical winding being wound at least once and at least partially around the at least one first leg and the at least one second leg, to comprise an integrated resonant inductance and an integrated magnetizing inductance (integrated magnetic components of the resonant tank).

Preferably, the first electrical winding is a primary-side electrical winding of the converter. Further preferably, the second electrical winding is a secondary-side electrical winding. The primary-side is also referred to as an input of the convert component, whereas the secondary-side is also referred to as an output of the converter component. Alternatively, the first electrical winding is preferably the secondary-side electrical winding and the second electrical winding is the primary-side electrical winding.

Further preferably, the second electrical winding or each second electrical winding is wound exactly once (N=1) or exactly twice (N=2) or exactly three times (N=3) or exactly four times (N=4) or exactly five times (N=5) or more times (N>5). Preferably, the converter component and/or the converter comprises exactly one first electrical winding, which is preferably wound more than once around the first leg of the magnetic component. Therein, preferably, the second electrical windings are interleaved with the first electrical winding, so as to be alternately arranged along the first direction with multiple windings of the first electrical winding. In other words, for example, the first electrical winding is wound, in one layer, at least once around the first leg, a second electrical winding is disposed along the first direction on top of this first layer of first electrical winding, and a second layer of the first electrical winding is wound at least once around the first leg on top of the second electrical winding.

Preferably, multiple electrical conductors forming one second electrical winding are electrically connected to one another and preferably stacked in the first direction. In particular, these multiple electrical conductors of the second electrical winding are stacked alternatingly with winding turns of the first electrical winding ("interleaved").

Preferably, the magnetic core(s), the respective legs and/or their parts are formed of a ferrite material.

Further details, advantages, and features of the preferred embodiments of the present invention are described in detail with reference to the figures. Therein:
Fig. 1 shows a schematic cross-section of a converter component according to a first embodiment of the present invention;
Fig. 2 shows a schematic cross-section of a converter component according to a second embodiment of the present invention;
Fig. 3 shows a schematic cross-section of a converter component according to a third embodiment of the present invention;
Fig. 4 shows a schematic cross-section of a converter component according to a fourth embodiment of the present invention;
Fig. 5 shows an exploded view of a magnetic core of the converter component according to a fifth embodiment of the present invention;
Fig. 6 shows a first perspective view of the converter component according to any one of the embodiments of the present invention;
Fig. 7 shows a second perspective view of the converter component according to any one of the embodiments of the present invention; and
Fig. 8 shows a circuit diagram of an LLC resonant converter comprising the converter component according to any one of the embodiments of the present invention.

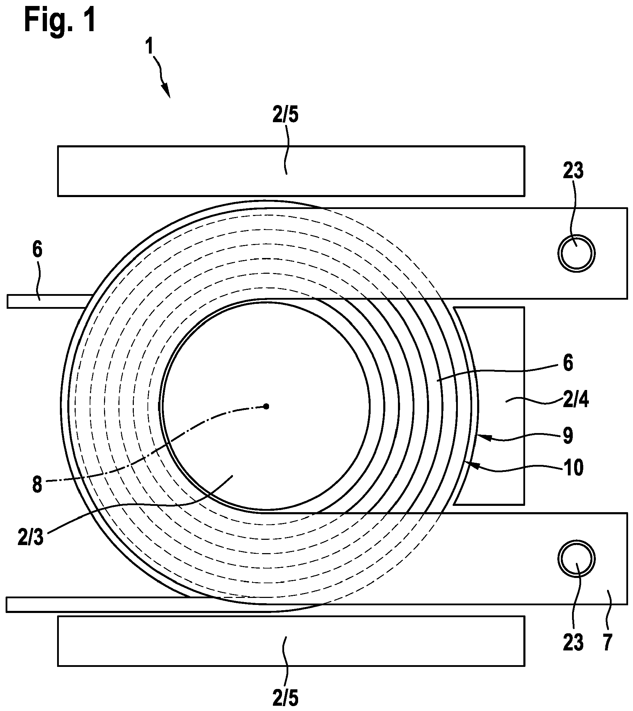

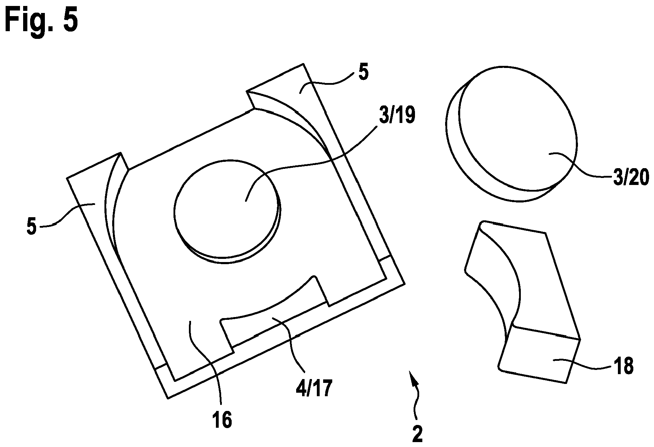

Fig. 1 shows a schematic cross-section of a converter component 1 according to a first embodiment of the present invention. In Fig. 1, for simplicity of explanation, a body portion of the magnetic core 2 has been omitted. This body portion is shown in Figs. 5, 6 and 7, and will be explained further below with reference thereto.

As can be taken from Fig. 1, the converter component 1 comprises a magnetic core 2 comprising preferably a ferrite material.

The magnetic core 2 comprises two winding legs 3, 4 and two return legs 5. The winding legs 3, 4, as explained in the following, are legs around which at least partially electrical windings are wound, whereas return legs 5 are defined as legs around which no electrical windings are wound. In general, the return legs 5 close a magnetic circuit of magnetic flux generated in the winding legs 3, 4 via the electrical windings.

In the following, the terms "partially surround" and "fully surround" are with respect to the cross sections shown in Figs. 1 to 4. Preferably, the respective objects or legs partially or fully surrounded may also be partially or fully surrounded with respect to their entire longitudinal extensions.

The magnetic core 2 comprises a first winding leg 3 and a second winding leg 4. The first winding leg 3 is, in cross-section (as shown in Fig. 1), circular. In other words, the first winding leg 3 is cylindrical. The configuration of the first winding leg 3 and the return legs 5 and not including the second winding leg 4, is similar to configurations commonly referred to as "ER core" configurations. Alternatively, a "PQ core" configuration may be employed for the first winding leg 3 and the return legs 5.

Further, the converter component 1 comprises one or more first electrical windings 6 wound around the first leg 3, wherein Fig. 1 merely shows one first electrical winding 6. A single electrical winding is defined as a continuous electrical conductor. In other words, multiple, electrically insulated and not directly connected electrical conductors are defined as multiple electrical windings. A single electrical conductor or directly and electrically connected multiple conductors together with a winding number greater than one is defined as a single electrical winding. The winding number may also be referred to as "a number of turns".

The first electrical winding 6 comprises a copper wire, especially a litz wire, and an electrical insulation coating. The first electrical winding 6 comprises a winding number greater than one. In other words, the first electrical winding 6 is wound around the first leg 3 multiple times. As can be taken from Fig. 1, the first electrical winding 6 completely surrounds the first leg 3 of the magnetic component 2.

The converter component 1 further comprises one or more second electrical windings 7 wound around the first leg 3 and the second leg 4 of the magnetic component 2.

The second electrical winding 7 is U-shaped. The second electrical winding 7 thus partially surrounds the first leg 3 and the second leg 4. Thereby, the second electrical winding 7 generates a stray inductance in the second leg 4 of the magnetic component 2, which essentially acts as the integrated magnetic components of the resonance tank for the converter component 1 (i.e. not comprising a resonance capacitor). In this embodiment, the second electrical winding 7 comprises a single copper plate.

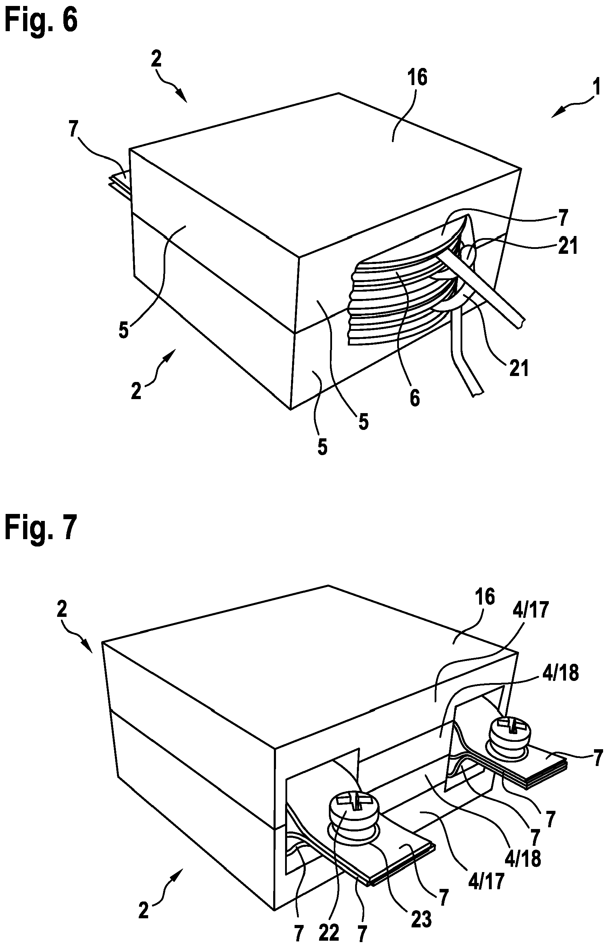

As will be explained also with reference to Figs. 6 and 7, the second electrical winding 7 comprises through holes 23 for electrically contacting the second electrical winding 7 and/or electrically contacting multiple conductors of the second electrical windings 7 with one another into one single second electrical winding 7, as shown in Figs. 6 and 7.

The first electrical winding 6 and the second electrical winding 7 are stacked along a first direction 8. The first direction 8 is parallel to a winding axis of the first electrical winding 6 around the first leg 3.

Further, the second leg 4 comprises a rounded, concave surface 9 which is configured to accommodate a portion of an outer surface 10 of the first electrical winding 6. The first electrical winding 6 is disposed adjacent to the second leg 4, but does not surround, especially not partially, the second leg 4.

The return legs 5 are arranged on outer sides (top and bottom of Fig. 1) of the magnetic core 2.

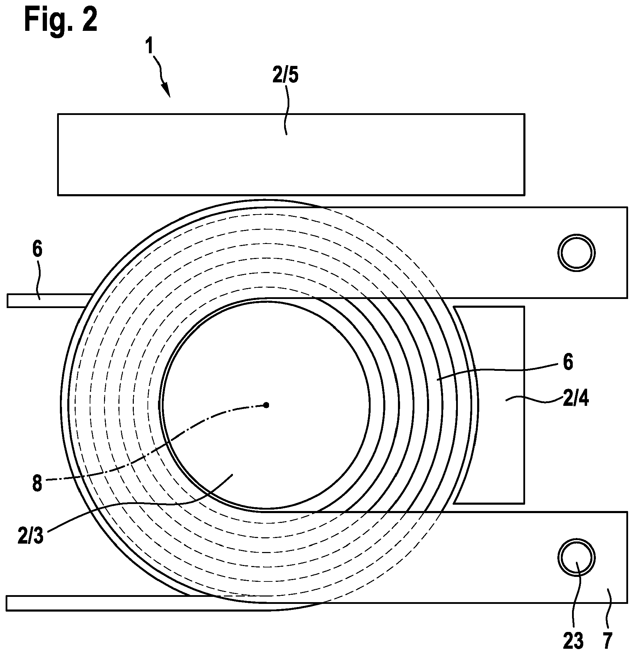

Fig. 2 shows a schematic cross-section of a converter component 1 according to a second embodiment of the present invention.

As can be taken from Fig. 2, the magnetic core 2 comprises one single return leg 5.

Further, the magnetic core 2 with the single return leg 5 and the first winding leg 3 may also be referred to as a "U-core", with the one return leg 5 being one straight portion of the "U" and the first winding leg 3 being the other straight portion of the "U", wherein the connecting portion of the "U" is formed by the body portion of the magnetic core 2 not shown in Fig. 2.

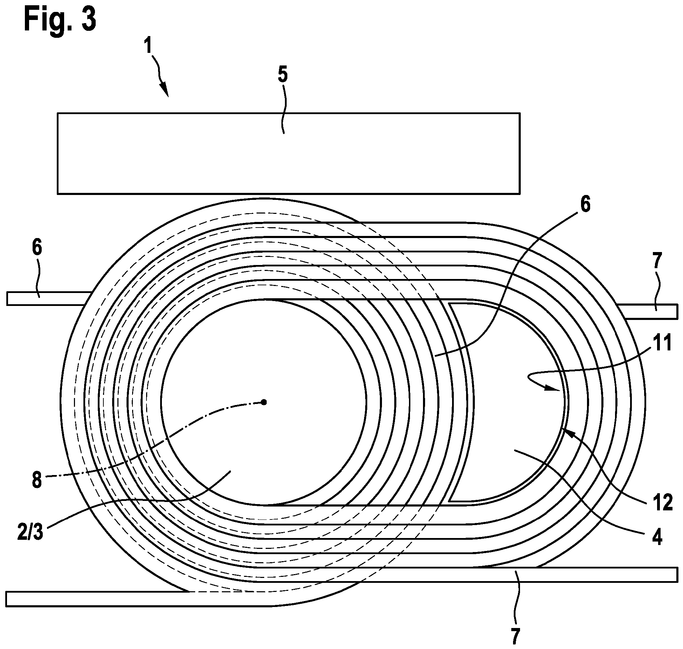

Fig. 3 shows a schematic cross-section of a converter component 1 according to a third embodiment of the present invention.

As can be taken from Fig. 3, the converter component 1 of the third embodiment comprises a magnetic core 2 with one return leg 5. Further, the second electrical winding 7 is ring-shaped, especially elliptical or oval ring-shaped. In the present embodiment, the second electrical winding 7 comprises a wire, especially a litz wire, preferably formed of copper. Preferably, the number of turns of the second electrical winding 7 is more than one.

Herein, the second electrical winding 7 completely surrounds the first leg 3 and the second leg 4. Further, the second leg 4 comprises a round, especially convex, second surface 11 configured to accommodate an inner surface 12 of the second electrical winding 7.

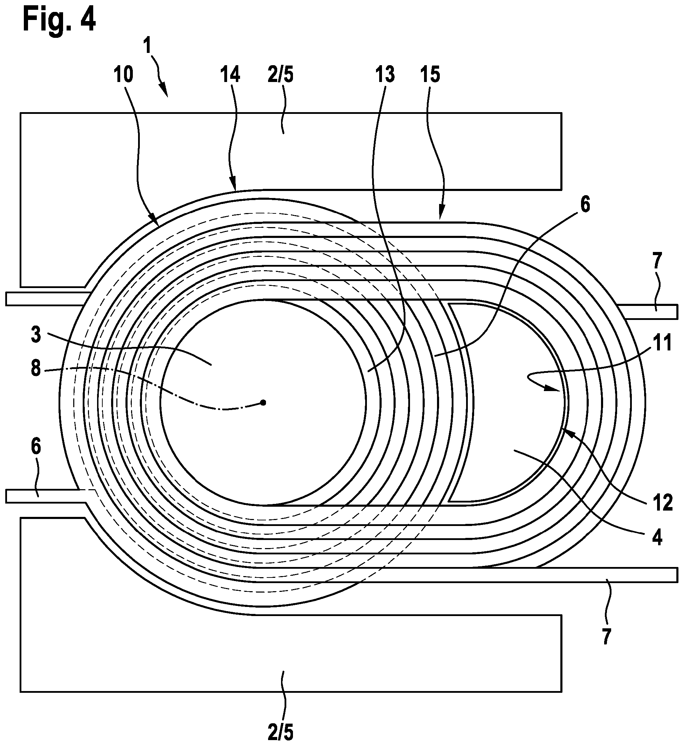

Fig. 4 shows a schematic cross-section of a converter component 1 according to a fourth embodiment of the present invention.

As can be taken from Fig. 4, the second electrical winding 7 of this embodiment comprises a ring-shaped sub-winding section 13. The sub-winding section 13 completely surrounds the first leg 3.

Further, although not shown, the second electrical winding 7 may preferably comprise an additional sub-winding section which completely surrounds the second leg 4. Such an additional sub-winding section for the second leg 4 may also be included alternatively to the shown sub-winding section 13 for the first leg 3.

In addition, although the case is shown in which the second electrical winding 7 formed of a wire includes the sub-winding section 13, this can also be the case for the second electrical winding 7 being formed of or comprising a plate conductor, especially a U-shaped plate conductor, as shown in for example Fig. 1.

In addition, the magnetic component 2 of the present embodiment comprises two return legs 5, each with rounded, especially concave, surfaces 14 which are each configured to accommodate outer surfaces 10, 15 of the first electrical winding 6 and the second electrical winding 7.

Fig. 5 shows an exploded view of the magnetic core 2 of the converter component 1 according to a fifth embodiment of the present invention.

In Fig. 5, a body portion 16 of the magnetic core 2 is shown. The body portion 16 connects, especially magnetically, the first leg 3, the second leg 4, and the return legs 5.

In addition, the first leg 3 comprises a first part 19 formed integrally with the body portion 16 of the magnetic core 2. Further, the second leg 4 comprises a first part 17 formed integrally with the body portion 16 of the magnetic core 2.

The magnetic core 2 further comprises a second part 18 of the second leg 4, which is formed separate from the body portion 16 and the first part 17 of the second leg 4. In addition, the magnetic core 2 comprises a second part 20 of the first leg 3, which is formed separate from the body portion 16 and the first part 19 of the first leg 3.

As will be explained with reference to Figs. 6 and 7, the converter component 1 in some embodiments includes two of the magnetic cores 2 (the part including the body portion 16) stacked on top of one another with the legs 3, 4, 5 respectively facing each other (i.e. facing the legs 3, 4, 5 of the other magnetic core 2), and at least one of each of the second parts 18, 20 for the first leg 3 and the second leg 4.

On the other hand, the converter component 1 of another embodiment comprises exactly one of the magnetic cores 2 (the part including the body portion 16) shown in Fig. 5 with at least one of each of the second parts 18, 20 as well as a top plate (not shown) covering the magnetic core 2, wherein the top plate also comprises a ferrite material.

In particular, this has the advantage that such a converter component 1 may be easily assembled. In addition, the dimensions of especially the second parts 18, 20 may be easily adapted for a higher number of first and/or second electrical windings 6, 7 and/or for a higher number of turns of each of these.

Further, filler material may preferably be arranged between the second parts 18, 20 and the first parts 17, 19 and/or between multiple second parts 18, 20 stacked on top of one another. In addition, an adhesive, especially comprising a ferrite filler material, may be arranged between the second parts 18, 20 and the first parts 17, 19 and/or between multiple second parts 18, 20 stacked on top of one another.

It should be noted, however, that the second parts 18, 20 are not strictly necessary. For instance, the dimensions of the first parts 17, 19 may be chosen so as to suitably connect with the other magnetic core 2 or with the top plate described above. Especially in this case, a longitudinal length (essentially depth direction of Fig. 5) of the first parts 17, 19 may be configured so as to correspond to a longitudinal length of the return legs 5. Preferably, the return legs 5 may also comprise such second parts (not shown) accordingly.

Figs. 6 and 7 each show a different perspective view of the converter component 1 according to any one of the embodiments of the present invention.

Essentially, Fig. 6 shows a perspective view onto the left side of Fig. 1, wherein both the first electrical winding 6 and the second electrical winding 7 are visible. On the other hand, Fig. 7 essentially shows a perspective view onto the right side of Fig. 1, wherein only the ends of the second electrical winding 7 and the second leg 4 are visible.

As can be taken from Fig. 6, the converter component 1 according to the present embodiment comprises two of the aforementioned magnetic cores 2 stacked facing each other and on top of one another, with the first and second electrical windings 6, 7 disposed therebetween.

Further, the converter component 1 comprises four second electrical winding plates 7 as shown in Fig. 2. As can be seen from Fig. 7, these are connected electrically to one another, such that they together constitute one continuous second electrical winding 7 with essentially four turns.

Between the multiple second electrical winding plates 7, the turns of the first electrical windings 6 are disposed so as to be sandwiched, i.e. interleaved, by or with the second electrical winding 7. As shown in Fig. 6, the first electrical winding 6 includes interconnection portions 21, which extend from one layer of the first electrical winding 6 sandwiched by two turns of the second electrical winding 7 to the next, thereby interleaving the first and second electrical windings 6, 7.

In addition, Fig. 7 shows in detail the assembled configuration of the second leg 4. Therein, each magnetic core 2 comprises the first part 17 of the second leg 4 integral with the body portion 16. In addition, two second parts 18 of the second leg 4 are disposed between the sandwiched magnetic cores 2.

Air gaps and/or filler material and/or adhesive comprising the filler material may preferably be disposed between the respective parts 17, 18, 19, 20 and/or the respective legs 3, 4, 5.

Further, the multiple turns of the second electrical winding 7 are connected to one another via a screw 22 driven through the through holes 23.

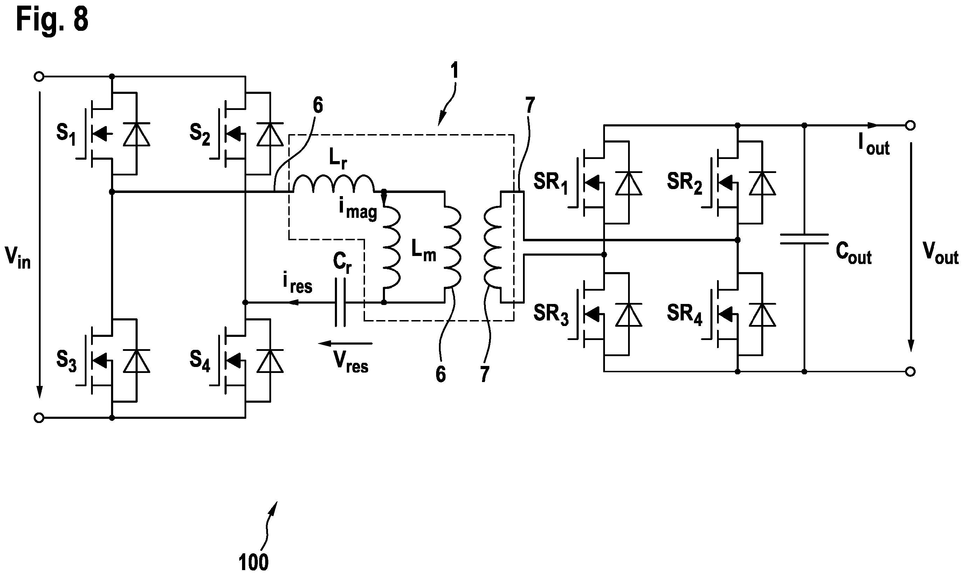

Fig. 8 shows a circuit diagram of an LLC resonant converter 100 according to the present invention. The resonant converter 100 comprises the converter component 1 according to any one of the embodiments of the present invention.

As is shown schematically in Fig. 8, the converter component 1 integrally includes the resonant inductance Lᵣ and the magnetizing inductance Lₘ, both provided via the first and second electrical windings 6, 7 together with the first and second legs 3, 4.

Further, Fig. 8 shows the converter component 1 in a full-bridge rectifier configuration via the switches S₁ - S₄ and SR₁ - SR₄ for outputting a resultant voltage V_{OUT} from an input voltage Vᵢₙ.

As indicated in Fig. 8, preferably, the first electrical winding 6 corresponds to the primary-side (input side) of the converter component 1, whereas the second electrical winding 7 preferably corresponds to the secondary-side (output side) of the converter component 1.

In addition to the foregoing written explanation of the invention, it is explicitly referred to figures 1 to 8, which in detail show features of the invention.

### List of Reference Numerals

- 1: converter component
- 2: magnetic core
- 3: first leg (winding leg)
- 4: second leg (winding leg)
- 5: return leg
- 6: first electrical winding
- 7: second electrical winding
- 8: first direction
- 9: first rounded surface of the second leg
- 10: outer surface of the first electrical winding
- 11: second rounded surface of the second leg
- 12: inner surface of the second electrical winding
- 13: sub-winding section
- 14: rounded surface
- 15: outer surface of the second electrical winding
- 16: body portion of the magnetic core
- 17: first part of the second leg
- 18: second part of the second leg
- 19: first part of the first leg
- 20: second part of the first leg
- 21: interconnection portions
- 22: screw
- 23: through hole
- 100: converter

## Claims

1. Converter component (1), especially for LLC resonant converters, comprising:
a magnetic core (2) comprising at least three legs (3, 4, 5);
at least one first electrical winding (6); and
at least one second electrical winding (7); wherein
the second electrical winding (7) is wound so as to at least once and at least partially surround at least a first leg (3) and a second leg (4) of the at least three legs (3, 4, 5) of the magnetic core (2).

2. Converter component (1) according to claim 1, wherein the first electrical winding (6) is wound so as to least once and, especially fully, surround the first leg (3) of the magnetic core (2).

3. Converter component (1) according to claim 2, wherein the first electrical winding (6) is wound so as to not surround the second leg (4) of the magnetic core (2).

4. Converter component (1) according to any one of the foregoing claims, wherein the first electrical winding (6) and the second electrical winding (7) are stacked along a first direction (8) parallel to a winding axis of the electrical windings (6, 7).

5. Converter component (1) according to any one of the foregoing claims, wherein the second leg (4) includes a first rounded surface (9) configured to accommodate an outer surface (10) of the first electrical winding (6).

6. Converter component (1) according to any one of the foregoing claims, wherein the second electrical winding (7) is substantially U-shaped and partially surrounds the first leg (3) and the second leg (4).

7. Converter component (1) according to any one of claims 1 to 5, wherein the second electrical winding (7) is ring-shaped, especially circular or oval ring-shaped, and completely surrounds the first leg (3) and the second leg (4) of the magnetic core (2).

8. Converter component (1) according to claim 7, wherein the second leg (4) comprises a second rounded surface (11) configured to accommodate an inner surface (12) of the second electrical winding (7).

9. Converter component (1) according to any one of the foregoing claims, wherein the second electrical winding (7) further includes at least one ring-shaped sub-winding section (13) which completely surrounds the first leg (3) or the second leg (4) of the magnetic core (2).

10. Converter component (1) according to any one of the foregoing claims, wherein of the three or more legs (3, 4, 5) of the magnetic core (2), at least one, preferably exactly one or two, third leg(s) is/are a return leg(s) (5) around which no windings are wound.

11. Converter component (1) according to claim 10, wherein at least one third leg (5) includes a rounded surface (14) configured to accommodate an outer surface (10, 15) of the first electrical winding (6) and/or the second electrical winding (7).

12. Converter component (1) according to any one of the foregoing claims, wherein the magnetic core (2) comprises at least one plate-shaped body portion (16) connecting, especially magnetically, the at least three legs (3, 4, 5).

13. Converter component (1) according to any one of the foregoing claims, wherein all legs (3, 4, 5) and one plate-shaped body portion (16) of the magnetic core (2) are formed integrally with one another.

14. Converter component (1) according to any one of claims 1 to 12, wherein the at least one first leg (3), the at least one third leg (5), and one plate-shaped body portion (16) form a U-shaped or E-shaped magnetic core (2), wherein two of such magnetic cores (2) are stacked facing each other along the first direction (8), and at least a part of the at least one second leg (4) is inserted between the stacked magnetic cores (2).

15. Converter (100), especially an LLC resonant converter, comprising at least one converter component (1) according to any one of the foregoing claims, wherein the magnetic core (2) is adapted for comprising an integrated resonant inductance and magnetizing inductance, and the first electrical winding (6) is preferably a primary-side electrical winding and/or the second electrical winding (7) is preferably a secondary-side electrical winding.
